Europäisches Patentamt

European Patent Office

Office européen des brevets

(11) Veröffentlichungsnummer: **0 465 861 A1**

# EUROPÄISCHE PATENTANMELDUNG

(21) Anmeldenummer: **91109694.9**

(22) Anmeldetag: **13.06.91**

(51) Int. Cl.5: **B23K 35/30**, //C22C9/00

(30) Priorität: **04.07.90 DE 4021287**
**04.06.91 DE 4118217**

(43) Veröffentlichungstag der Anmeldung:
**15.01.92 Patentblatt 92/03**

(84) Benannte Vertragsstaaten:
**AT BE CH DE DK ES FR GB IT LI LU NL SE**

(71) Anmelder: **Degussa Aktiengesellschaft**
**Weissfrauenstrasse 9**
**W-6000 Frankturt am Main 1(DE)**

(72) Erfinder: **Malikowski, Willi**
**Brentanoplatz 11**
**W-8750 Aschaffenburg(DE)**
Erfinder: **Weise, Wolfgang, Dr. Dipl.-Ing.**
**Eckenheimer Landstrasse 146**
**W-6000 Frankturt/M.(DE)**
Erfinder: **Zimmermann, Karl-Friedrich, Dr.**
**Dipl.-Ing.**
**Stettiner Strasse 20**
**W-6056 Heusenstamm(DE)**
Erfinder: **Zhuang, Hongshou,Prof.**
**Steppenbergallee 201**
**W-5100 Aachen(DE)**
Erfinder: **Lugscheider, Erich, Prof. Dr.**
**Steppenbergallee 201**
**W-5100 Aachen(DE)**

(54) **Lotlegierung.**

(57) Duktile, zu Formteilen kaltverformbare Lotlegierungen aus Kupfer-Phosphor- (Silber, Zinn, Indium) erhält man, wenn man 0,01 bis 0.3 % Mangan, Rhenium, Hafnium, Niob, Tantal, Molybdän, Wolfram, Eisen oder 0,01 bis 0,08 % Silizium zulegiert.

EP 0 465 861 A1

EP 0 465 861 A1

Die Erfindung betrifft eine Lotlegierung zum Löten von Kupfer und Kupferlegierungen, bestehend aus 80 bis 94 % Kupfer, 4 bis 8 % Phosphor, 0 bis 18 % Silber, 0 bis 10 % Zinn, 0 bis 10 % Indium und einem weiteren Bestandteil.

Zum Löten von Kupferwerkstoffen werden häufig phosphorhaltige Kupfer- oder Kupfersilberlote eingesetzt. Beim Löten von Kupfer sind diese Lote selbstfließend, sie können also ohne Flußmittel angewendet werden. Beim Löten von Messing, Bronze oder Rotguß müssen dagegen Flußmittel eingesetzt werden.

Das Verarbeiten dieser Lote ohne Flußmittel beruht auf der reduzierenden Wirkung des Phosphors, welches gleichzeitig den Schmelzpunkt der Lote herabsetzt. Eine weitere Schmelzpunkterniedrigung erfolgt durch den Zusatz von Silber, Zinn und/oder Indium. Ein bekanntes Lot hat beispielsweise die Zusammensetzung CuPSn = 86,25/6,75/7.

Der reduzierend und schmelzpunkterniedrigend wirkende Phosphorgehalt führt in diesen Legierungen aufgrund der Bildung von spröden Phasen zu einer deutlichen Abnahme der Verformbarkeit bei steigendem Phosphorgehalt. Da die niedrigschmelzenden Legierungselemente Zinn und Indium ebenfalls spröde intermetallische Verbindungen bilden, sind Legierungen wie CuPSn kaum noch zu verformen.

Eine Herstellung von Lotformteilen durch Kaltverformung ist bei diesen Lotlegierungen daher nicht möglich.

Die Verwendung von Lotformteilen ist für viele Lötungen jedoch aus wirtschaftlichen Gründen unbedingt erforderlich. Es war daher das Bestreben der Fachwelt, CuP(Ag, Sn,In)-Legierungen zu finden, die sich leicht verformen lassen.

In der SU-PS 481,387 werden Lote aus Kupfer-Phosphor-Zinnlegierungen beschrieben, denen zur Verbesserung der mechanischen Eigenschaften und zur Beseitigung der Toxizität 0,01 bis 0,2 % Zirkonium zugesetzt werden. Der Einfluß von Zirkonium auf das Verformungsverhalten dieser Legierungen ist aber relativ gering.

Bekannt sind weiterhin Lote, die neben Kupfer, Phosphor und gegebenenfalls Silber noch mindestens 1 % Nickel, Chrom, Eisen und/oder Mangan enthalten (JP-A-58-148094). Diese Lote besitzen allerdings deutlich schlechtere Fließ- und Benetzungseigenschaften als die reinen Kupfer-Phosphor-Legierungen. Aus der DD-PS 40989 sind Lote bekannt, die neben Kupfer und Phosphor zwingend Vanadium in Mengen bis 10 % enthalten. Auch hier sind die Fließeigenschaften gegenüber reinen Kupfer-Phosphor-Legierungen verschlechtert. Die JP-A-62-81290 beschreibt hochsilberhaltige (47-86%) Kupfer-Phosphor-Lote, die 0,5 bis 10 % Titan, Zirkonium und/oder Hafnium enthalten, die alle drei die gleiche Wirkung auf das Lot ausüben sollen.

Außerdem ist aus der Avtom. Svarka, Febr. 1977, (2), 55-57 ein Kupfer-Phosphor-Lot mit 0,1 bis 1,5 % Silizium bekannt. Siliziumgehalte von 0,1 % und höher führen jedoch zur Ausbildung von sogenannten "Lotsäcken" infolge einer sehr niedrigen Viskosität dieser Lote.

Es war daher Aufgabe der vorliegenden Erfindung, eine Lotlegierung zum Löten von Kupfer und Kupferlegierungen zu entwickeln, bestehend aus 80 bis 94 % Kupfer, 4 bis 8 % Phosphor, 0 bis 18 % Silber, 0 bis 10 % Zinn, 0 bis 10 % Indium und einem weiteren Bestandteil, die sich zur Herstellung von Lotformteilen leicht kaltverformen lässt und das gleiche Fließ- und Benetzungsverhalten aufweist wie Kupfer-Phosphorlote ohne diese Bestandteile.

Diese Aufgabe wird erfindungsgemäß dadurch gelöst, daß die Legierungen 0,01 bis 0,3 % Mangan, Rhenium, Hafnium, Niob, Tantal, Molybdän, Wolfram, Eisen oder 0,01 bis 0,08 % Silizium enthalten.

Vorzugsweise enthalten diese Legierungen 0,05 bis 0,2% Hafnium oder Mangan oder 0,02 bis 0,08 % Silizium.

Diese Zusätze bewirken überraschenderweise eine Verbesserung der Duktilität der Kupfer-Phosphor- bzw. Kupfer-Phosphor-Silber, Zinn, Indium-Legierungen, die beträchtlich über den Effekt hinausgeht, der mit Zirkonium oder sonstigen bekannten Zusätzen erreichbar ist.

Besonders der Zusatz von Silizium in sehr geringen Mengen (0,01 bis 0,08 %) führt zu einer beträchtlichen Steigerung der Duktilität.

Die Tabelle zeigt eine Reihe von Legierungen aus Kupfer-Phosphor- und Kupfer-Phosphor-Zinnlegierungen mit Zusätzen von Zirkonium und anderen Metallkomponenten, wobei die Bruchdehnung als Maß für das Kaltumformungsverhalten dient. Daraus ist zu ersehen, daß insbesondere Zusätze von Silizium, Hafnium und Mangan ein wesentlich besseres Kaltumformungsverhalten bei Kupfer-Phosphor- und Kupfer-Phosphor-Zinnlegierungen bewirken als Zirkonium. Das gleiche Verhalten beobachtet man auch bei Kupfer-Phosphor-Silber- und Kupfer-Phosphor-Indium-Legierungen. Diese Lotlegierungen ließen sich problemlos zu Lotringen und anderen Lotformteilen verarbeiten. Die Legierungen weisen außerdem gute Benetzungs- und Fließeigenschaften auf.

Kupfer-Phosphor-Lote mit sehr geringen Beimengen an Silizium (0,01 bis 0.08 % ) zeigen praktisch das gleiche Lötverhalten wie siliziumfreie Kupfer-Phosphor-Legierungen, weisen aber eine deutlich verbesserte

Duktilität auf.

Tabelle:

| Zusammensetzung | | | | Bruchdehnung |
|---|---|---|---|---|
| Cu% | P% | Sn% | X% | % |
| 86,25 | 6,75 | 7 | - | 0,2 |
| 89,7 | 6 | 4,3 | - | 10 |
| 94 | 6 | - | - | |
| 89,6 | 6 | 4,3 | 0,1 Zr | 12 |
| 93,9 | 6 | - | 0,1 Zr | |
| 89,6 | 6 | 4,3 | 0,1 Hf | 28 |
| 89,6 | 6 | 4,3 | 0,1 Mn | 18 |
| 91,9 | 8 | - | 0,1 Hf | 15 |
| 91,2 | 8 | - | 0,1 Mn | 14 |
| 92,0 | 8 | - | - | 12 |
| 92,8 | 7,2 | - | - | 10 |
| 92,7 | 7,2 | - | 0,1 Hf | 17 |
| 92,6 | 7,2 | - | 0,1 Mn | 15 |
| 93,8 | 6,2 | - | - | 15 |
| 93,7 | 6,2 | - | 0,1 Hf | 18 |
| 93,7 | 6,2 | - | 0,1 Mn | 16 |
| 91,8 | 6,2 | 2 Ag | - | 15 |
| 91,7 | 6,2 | 2 Ag | 0,1 Hf | 30 |
| 91,7 | 6,2 | 2 Ag | 0,1 Mn | 28 |
| 89,7 | 6 | 4,3 In | - | 0,3 |
| 89,6 | 6 | 4,3 In | 0,1 Hf | 28 |
| 89,6 | 6 | 4,3 In | 0,1 Mn | 18 |
| 86,20 | 6,75 | 7 | 0,05 Si | 5 |
| 82,75 | 7,2 | - | 0,05 Si | 25 |
| 93,0 | 6,9 | - | 0,1 Re | 20 |
| 93,0 | 6,9 | - | 0,1 Mo | 22 |
| 93,0 | 6,9 | - | 0,1 W | 21 |
| 93,0 | 6,9 | - | 0,1 Nb | 18 |
| 93,0 | 6,9 | - | 0,1 Ta | 19 |
| 93,0 | 6,9 | - | 0,1 Fe | 20 |

**Patentansprüche**

1. Lotlegierung zum Löten von Kupfer und Kupferlegierungen, bestehend aus 80 bis 94 % Kupfer, 4 bis 8 % Phosphor, 0 bis 18 % Silber, 0 bis 10 % Zinn, 0 bis 10 % Indium und einem weiteren Bestandteil, dadurch gekennzeichnet,
daß sie 0,01 bis 0,3 % Mangan, Rhenium, Hafnium, Niob, Tantal, Molybdän, Wolfram oder Eisen oder 0,01 bis 0,08 % Silizium enthält.

2. Lotlegierung nach Anspruch 1,
dadurch gekennzeichnet,
daß sie 0,05 bis 0,2 % Hafnium oder Mangan oder 0,02 bis 0,08 % Silizium enthält.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-896 816   (A. REBOUD)<br>* Das ganze Dokument *<br>– – – | 1 | B 23 K 35/30 //<br>C 22 C 9/00 |
| X | SOVIET INVENTION ILLUSTRATED, Woche 9042, 28. November 1990, Kurzfassung Nr. 90-319109/42, Derwent Publications Ltd, London, GB;<br>& SU-A-1551 502 (PATON ELECTROWELD) 23-03-1990<br>– – – | 1 | |
| A | GB-A-2 168 078   (UNIV. OF BRADFORD)<br>– – – | | |
| A | US-A-2 390 775   (J.G. CHRIST)<br>– – – | | |
| A,D | PATENT ABSTRACTS OF JAPAN, Band 7, Nr, 269 (M-259)[1414], 30. November 1983;<br>& JP-A-58 148 094 (TANAKA KIKINZOKU KOGYO) 03-09-1983<br>– – – | | |
| A | SOVIET INVENTIONS ILLUSTRATED, Woche B09, 11. April 1979, Kurzfassung Nr. 17416B/09, Derwent Publications Ltd, London, GB;<br>& SU-A-492 366 (TOLYATTI POLY) 15-05-1978<br>– – – – – | | |

| | RECHERCHIERTE SACHGEBIETE (Int. Cl.5) |
|---|---|
| | B 23 K |

Der vorliegende Recherchenbericht wurde für alle Patentansprüche erstellt

| Recherchenort | Abschlußdatum der Recherche | Prüfer |
|---|---|---|
| Den Haag | 11 Oktober 91 | MOLLET G.H.J. |